# EUROPEAN PATENT APPLICATION

(11) **EP 4 512 762 A1**
(43) Date of publication of application: **26.02.2025**
(21) Application number: 24196044.2
(22) Date of filing: 23.08.2024
(51) Int. Cl.: B66C 23/26, B66C 13/12, F03D 13/20

(54) **TOWER CRANE FOR HOISTING A LOAD**

(30) Priority: 24.08.2023 NL 2035667
(71) Applicant: Koninklijke BAM Groep N.V., 3981 AZ Bunnik (NL)
(72) Inventor: BECK, Johannes Antonius Franciscus, Bunnik (NL); VERBRUGGE, Sebastiaan Gerardus Silvester, Bunnik (NL)
(74) Representative: EP&C

(57) **Abstract**

Tower crane (100) for hoisting a load (101), the tower crane comprising a base (102) arranged on the ground, a mast (103) mounted on the base (102), a boom (104) extending transverse to the mast (103), the boom having a hoisting side (105) carrying a hoisting cable (105a) with hoisting gripper (105b) for gripping the load to be manipulated by the tower crane, and a counterweight side (106) provided with a counterweight (106a), wherein the hoisting side and counterweight side of the boom extend in opposite directions from the mast, wherein the boom (104) is provided with one or more vertical-axis wind turbines (107).

## Description

The present invention relates to the field of tower cranes for hoisting a load.

The construction industry plays a pivotal role in the global economy, driving growth and development. However, it is also known for its significant environmental footprint, especially in terms of energy consumption and greenhouse gas emissions. As the world shifts towards sustainable practices, there is a pressing need to enhance the efficiency of construction equipment, particularly tower cranes, which are indispensable in large-scale building projects.

Tower cranes are primarily powered by electricity and are notorious for their high energy demand, which primarily stems from their heavy-duty motors for lifting the heavy loads. Heavy cranes require a current of 750 Amp (= 3x 250 Amp), lighter cranes require a current of 480 Amp (= 3x 160 Amp). These amounts of current can be provided by the grid, but this requires special measures which are expensive and which are on construction sites in general not available. As a consequence, tower cranes are frequently powered by generators driven by fossil fuels, such as diesel generators providing electricity which in turns powers the tower crane.

However, the trend in recent years has been to transition toward more sustainable solutions, with a focus on replacing energy from fossil fuels by renewable energy sources like solar panels.

Therefore, it is an object of the present invention to provide a tower crane for hoisting a load allowing a greener and more sustainable operation, or to provide at least an alternative tower crane.

According to the invention, the object of the invention is achieved by a tower crane for hoisting a load, the tower crane comprising:
- a base arranged on the ground,
- a mast mounted on the base,
- a boom extending transverse to the mast, the boom having a hoisting side carrying a hoisting cable with hoisting gripper for gripping the load to be manipulated by the tower crane, and a counterweight side provided with a counterweight, wherein the hoisting side and counterweight side of the boom extend in opposite directions from the mast, wherein the boom is provided with one or more vertical-axis wind turbines.

According to the invention, the tower crane may further comprise:
- a battery device configured to store electric power generated by the one or more vertical-axis wind turbines and to power at least part of the electric systems of the tower crane,
   and/or
- a grid connector configured for connecting the one or more vertical-axis wind turbines to the grid to supply the electric power generated by the one or more vertical-axis wind turbines to the grid.

The electric systems of a tower crane may for example comprise one or more of:
- an electrically driven hoisting device configured for hoisting the hoisting cable with the gripper and for moving the vertical part of the hoisting cable along the boom to and fro with respect to the mast;
- the lighting of the crane and/or operator's cabin;
- the heating of the operator's cabin,
- the controller used by the operator to control the hoisting operation.

A tower crane is generally a tall and powerful construction machine designed to hoist and move (heavy) loads in construction sites. The tower crane comprises a base arranged on the ground. The base of the tower crane serves as the foundation and anchor point for the entire structure. It is usually a large and sturdy platform that is firmly fixed to the ground to provide stability during operations. The base's weight and size are essential to counterbalance the weight of the tower crane above the base and the load to be hoisted, ensuring the tower crane remains upright and safe during hoisting tasks.

The tower crane further comprises a mast mounted on the base. The mast is a robust structure that provides the tower crane's height. The mast is typically vertical orientated relative to the ground and consists of steel sections bolted together to form a continuous vertical column. The mast's height can vary depending on the required hoisting height.

The tower crane further comprises a boom extending transverse to the mast. For example, the boom of the tower crane extends horizontally from the top of the mast. The boom has a hoisting side carrying a hoisting cable with hoisting gripper for gripping the load to be manipulated by the tower crane and a counterweight side provided with a counterweight. The length of the hoisting side determines the tower crane's maximum reach, enabling the hoisting cable with the hoisting gripper to hoist loads to various distances from the base. For example, a trolley system is provided on the hoisting side allowing the hoisting cable with the hoisting gripper to move back and forth along the length of the hoisting side of the boom. The hoisting gripper is used to engage on the load that needs to be hoisted and moved. The counterweight is strategically placed on the counterweight side of the boom to maintain stability during hoisting operations. For example, the counterweight is between 15 000-25 000 kg. The hoisting side and counterweight side of the boom extend in opposite directions from the mast.

The boom is according to the invention further provided with one or more vertical-axis wind turbines (VAWT). Vertical-axis wind turbines are a type of wind turbine where the main rotor shaft is arranged vertically and is set transverse to the wind direction. Unlike traditional horizontal-axis wind turbines, which have the rotor shaft and blades rotating horizontally, vertical-axis wind turbines have their blades and rotor assembly oriented vertically around a central axis. The space efficiency of vertical-axis wind turbines makes them suitable for areas with limited space or where a compact design is essential. Further, where the horizontal axis of rotation of horizontal wind turbines must be aligned with the wind direction, this is not necessary with vertical-axis wind turbines. Vertical-axis wind turbines can continue to operate without adjusting their position in relation to the wind direction when the wind direction changes.

There are several designs of vertical-axis wind turbines known, which are in general named after a person like: the Savonius type VAWT, the Darrieus type of VAWT, the Giromill type of VAWT, the Gorlov type of VAWT, etc.

The one or more vertical wind turbines provided on the boom are configured to harness wind energy, e.g. during crane operations. The wind energy harnessed may be stored in a battery, supplied to the grid, and/or used to power the tower crane's systems. Doing so, its reliance on conventional power sources and its carbon footprint is reduced.

In an embodiment, the vertical-axis wind turbines are of the type having one or more helical shaped blades. The helical blades have a twisted or corkscrew-like form. The one or more helical shaped blades extend wrapped along the vertical rotational axis of the wind turbine, such as the so called Windwokkel^{™} (see e.g.:
https://www.greenhybrids.nl/solution/windwokkel/ ). The helical shape of the blade helps to maximize the capture of wind energy from various wind directions. For example, the vertical-axis wind turbine is a Gorlov-type VWAT having helical or spiral-shaped blades. The blades are shaped like a helix or an "S" curve. The wind turbine typically has two or three helical shaped blades attached to the main rotor shaft. Alternatively, the vertical-axis wind turbine is a helical Darrieus-type wind turbine, which is a specific variation of the Darrieus wind turbine. The helical Darrieus-type wind turbine combines the Darrieus turbine's vertical axis with helical-shaped blades. The helical Darrieus-type wind turbine features two or more helical-shaped blades. These blades are mounted on the vertical rotational axis.

In an embodiment, the one or more vertical-axis wind turbines are provided on the counterweight side of the boom. Placing the wind turbine on the counterweight side of the boom helps to maintain better balance and stability during tower crane operations, reducing the risk of tilting or imbalance of the tower crane. Further, the hoisting side of boom remains unobstructed for regular hoisting operations, ensuring smooth construction activities.

In an embodiment, the tower crane further comprises a battery device electrically connected to the one or more vertical-axis wind turbines and configured to be charged by the one or more vertical-axis wind turbines and a grid connector configured for connecting the tower crane to the power grid, wherein the battery device is further electrically connected to the grid connector and configured for being charged by the power grid and to one or more of the electric systems of the tower crane. For example, the battery device comprises a battery and a power converter arranged between the battery and the one or more vertical-axis wind turbines. The power converter is configured to convert an input power received from the one or more vertical-axis wind turbines to an output power applied to charge the battery. For example, the power converter is an AC (alternating current)/DC (direct current) converter, wherein the input power is an AC power and the output power is a DC power. The battery device is further electrically connected to the grid connector and configured for being charged by the power grid. For example, when the one or more vertical-axis wind turbines are generating no wind power, e.g. during windless periods, the battery device can be charged by the power grid when the state of charge of the battery is low. Alternatively, when the battery is fully charged, excess electricity generated by the one or more vertical-axis wind turbines can be provided to the power grid. The battery device is electrically connected to one or more of the electric systems of the tower crane. The battery of the battery device is configured to at least partially power the one or more of the electric systems of the tower crane. For example, the battery is able to power electric systems of the tower crane which operate at a low voltage, e.g. 24 V. The one or more of the electric systems of the tower crane are for example the heating system of the operator's cabin, airco of the operator's cabin, lighting of the crane and/or operator's cabin, etc.

The tower crane is connectable to the power grid via the grid connector, e.g. a plug. For example, in case the one or more vertical-axis wind turbines are generating wind power which is insufficient to power the tower crane and/or the battery is insufficiently charged, the tower crane may additionally or fully be powered by the power grid.

In an embodiment, the one or more electric systems comprises an electrically driven hoisting device configured for hoisting the hoisting cable with the gripper and for moving the vertical part of the hoisting cable along the boom to and fro with respect to the mast. The electrically driven hoisting device for example comprises the trolley system provided on the hoisting side allowing the hoisting cable with the hoisting gripper to move back and forth along the length of the hoisting side of the boom.

In an embodiment, the battery device and the one or more vertical-axis wind turbines are configured to charge the battery device outside operating hours of the tower crane, and wherein the battery device is configured to power the hoisting device during operating hours of the tower crane whilst simultaneously recharging the battery device by the power grid and, optionally, by the one or more vertical-axis wind turbines. The battery device and the one or more vertical-axis wind turbines are designed in a way that allow them to charge the battery device during periods when the tower crane is not in operation, typically referred to as outside operating hours of the tower crane, e.g. during the night hours. Optionally, the charging process of the battery device outside operating hours can at least partly take place by drawing power from the power grid. During the tower crane's operating hours, the stored energy in the battery device is utilized to power, such as fully powering, the hoisting device, enabling smooth and uninterrupted tower crane operations. Simultaneously, the battery device can continue to recharge itself by drawing power from both the power grid and the wind turbines, if available. This embodiment ensures that the tower crane's power demands are met efficiently and sustainably. By utilizing energy generated by the wind turbines during non-operating hours and storing the excess energy in the battery device, the battery device is able to provide power during the tower crane's active hours without relying solely on the power grid, thereby reducing carbon emissions and operating costs.

In an embodiment, the grid connector is configured to connect the battery device to the power grid via a fuse system limiting the current taken from the power grid to below or up to 100 Amp. For example, the fuse system comprises three fuses of 32 Amp each. By working with low ampere connections, such as 100 Amp or lower, less robust and expensive electrical infrastructure is required. This infrastructure includes smaller conductors, circuit breakers, and other equipment, leading to cost savings in both installation and maintenance. Generally, tower cranes require a higher ampere connection to meet their power requirements adequately. The tower crane according to the invention can e.g. be used on a grid connection which is commonly found in residential areas or utilized for various electrical appliances and equipment with an average power requirement. Therefore, the tower crane is in compliance with the common power requirement of local regulations and thus widely applicable.

In an alternative embodiment, the fuse system limits the current taken from the grid to below or up to 80 Amp. For example, the fuse system comprises three fuses of 25 Amp each.

In an embodiment, the tower crane and the battery device are configured such that the battery device functions as an electrical buffer between the hoisting device and the power grid to limit the current taken from the power grid to below or up to 100 Amp. The battery device functioning as an electrical buffer between the hoisting device and the power grid ensures that the power grid is capable of delivering a current below or up to 100 Amp to the tower crane without becoming overloaded by power peaks induced by the tower crane. Overloading of the power grid can lead to power outages, damage to electrical equipment and potential safety hazards. For example, during periods wherein there is a low power demand of the tower crane, the battery device is fully charged by energy from the one or more vertical-axis wind turbines and/or the power grid. In case there is a high power demand of the tower crane, e.g. during hoisting operations, the (fully charged) battery device is able to limit the current taken from the power grid to operate the tower crane due to the stored energy in the battery device.

Alternatively, the battery device functions as an electrical buffer between the hoisting device and the grid connector to limit the current taken from the power grid to below or up to 100 Amp.

In a further embodiment, the electrical buffer function of the battery device limits the current taken from the power grid to below or up to 80 Amp.

In an embodiment, the battery device has a capacity of at least 20 kWh, such as at least 40 kWh or at least 60 kWh or at least 80 kWh. Alternatively or additionally, the battery device has a capacity of at most 250 kWh, such as at most 200 kWh or at most 150 kWh. The battery capacity is for example in a range of 40 kWh to 250 kWh, preferably in a range of 40 kWh to 200 kWh, more preferably in a range of 80 kWh to 200 kWh. The battery capacity ensures that the tower crane can perform a range of tasks efficiently while minimizing environmental impact.

In an embodiment, each vertical-axis wind turbine is arranged on a pole having a clearance distance relative to the boom of at least 2 m. The clearance distance is specifically chosen to provide ample space for maintenance personnel to safely access the boom and conduct maintenance operations on the tower crane, e.g. on the wind turbine. The clearance distance prevents contact with rotating blades when someone needs to be near the one or more vertical wind turbines.

In an embodiment, the tower crane comprises at least two vertical-axis wind turbines, wherein a first vertical-axis wind turbine is arranged on the boom at a vertical position higher than a second vertical-axis wind turbine, the first vertical-axis wind turbine being adjacent to the second vertical-axis wind turbine. Two wind turbines are neighbouring when there is no other wind turbine on the straight (imaginary) line between the two neighbouring turbines. By arranging the first vertical-axis wind turbine at a vertical position higher than a second vertical-axis wind turbine on the boom, the impact of wind shadow (also known as "wake") on each wind turbine is minimised in order to optimise the efficiency of the wind turbines.

In a further embodiment, the bottom side of the first vertical-axis wind turbine is arranged at a vertical position equal to or higher than the top side of the second vertical-axis wind turbine. Alternatively, the bottom side of the first vertical-axis wind turbine is arranged at a vertical position between the bottom side and the top side of the second vertical-axis wind turbine.

In an embodiment, the first vertical-axis wind turbine is arranged at a horizontal distance from the mast which distance is larger than horizontal distance of the second vertical-axis wind turbine from to the mast. By doing so, the effect of wind shadow is minimized.

In an embodiment, a horizontal spacing between the first vertical-axis wind turbine and the second vertical-axis wind turbine is between 1-4 meters, preferably between 1.5-3 meters. The optimal spacing between the vertical-axis wind turbines depends on various factors, including wind turbine size, wind speed and direction and atmospheric conditions.

In an embodiment, the one or more vertical-axis wind turbines have a height between 1.5 -3.5 meters, preferably between 2.0-2.5 meters.

According to another aspect of the invention, the invention further pertains to a use of a tower crane according to the invention for hoisting a load, wherein the tower crane is operating off-grid.

The invention will be described in more detail below with reference to figures, in which in a non-limiting manner exemplary one or more embodiments of the invention will be shown. The same reference numerals in different figures indicate the same characteristics in different figures.

In the figures:
Fig. 1: Schematically shows a side view of a tower crane according to the invention for hoisting a load, wherein two vertical-axis wind turbines are provided on a counterweight side of a boom;
Fig. 2: Schematically shows a side view of a part of the counterweight side of the boom of the tower crane according to Fig. 1;
Fig. 3: Schematically shows a perspective view of an alternative embodiment, wherein four vertical-axis wind turbines are provided on a counterweight side of a boom;
Fig. 4: Schematically shows an embodiment illustrating an electrical connection arrangement between a power grid and the tower crane according to the invention.

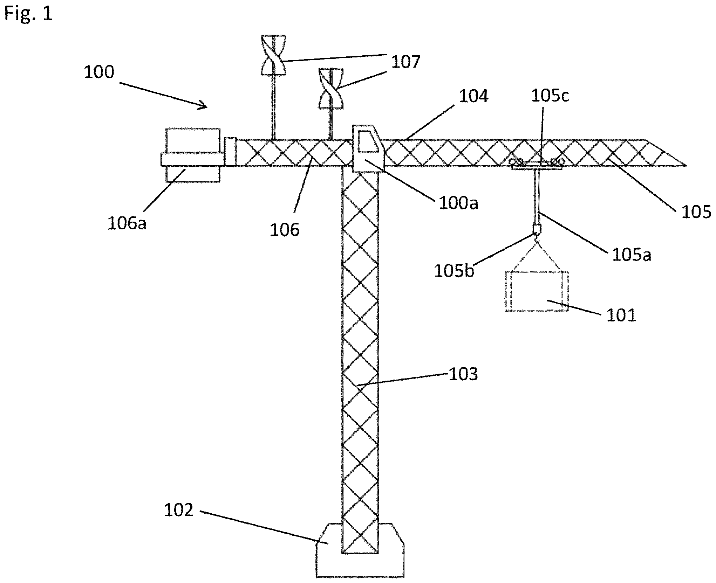

Fig. 1 schematically shows a side view of a tower crane 100 according to the invention for hoisting a load 101. The tower crane 100 comprises a base 102 arranged on the ground. The base 102 of the tower crane 100 serves as the foundation and anchor point for the entire structure. It is usually a large and sturdy platform that is firmly fixed to the ground to provide stability during operations. The base's weight and size are essential to counterbalance the weight of the tower crane 100 above the base 102 and the load 101 to be hoisted, ensuring the tower crane 100 remains upright and safe during hoisting tasks. The tower crane 100 further comprises a mast 103 mounted on the base 102. The mast 103 is a robust structure that provides the tower crane's height. The mast's height can vary depending on the required hoisting height. In the shown example, the tower crane 100 comprises a cabin 100a. The cabin 100a is positioned at the top of the mast 103. The cabin 100a provides a secure and elevated platform from which the operator can control the tower crane's movements. The cabin 100a is typically equipped with controls, instruments, and communication devices that allow the operator to precisely control the tower crane's movements. The tower crane 100 further comprises a boom 104 extending transverse to the mast 103. In the shown example, the boom 104 of the tower crane 100 extends horizontally from the top of the mast 103. The boom 104 has a hoisting side 105 carrying a hoisting cable 105a with hoisting gripper 105b for gripping the load 101 to be manipulated by the tower crane 100 and a counterweight side 106 provided with a counterweight 106a. The length of the hoisting side 105 determines the tower crane's maximum reach, enabling the hoisting cable 105a with the hoisting gripper 105b to hoist loads to various distances from the base 102. A trolley system 105c is provided on the hoisting side 105 allowing the hoisting cable 105a with the hoisting gripper 105b to move back and forth along the length of the hoisting side 105 of the boom 104. The hoisting gripper 105b is used to engage on the load 101 that needs to be hoisted and moved. The counterweight 106a is strategically placed on the counterweight side 106 of the boom 104 to maintain stability during hoisting operations. For example, the counterweight 106a ranges between 15 000-25 000 kg. The hoisting side 105 and counterweight side 106 of the boom 104 extend in opposite directions from the mast 103.

The counterweight side 106 of the boom 104 is further provided with two vertical-axis wind turbines 107. The space efficiency of the vertical-axis wind turbines 107 makes them suitable for areas with limited space or where a compact design is essential.

Placing the vertical-axis wind turbines 107 on the counterweight side 106 of the boom 104 helps to maintain better balance and stability during tower crane operations, reducing the risk of tilting or imbalance of the tower crane 100. Further, the hoisting side 105 of boom 104 remains unobstructed for regular hoisting operations, ensuring smooth construction activities.

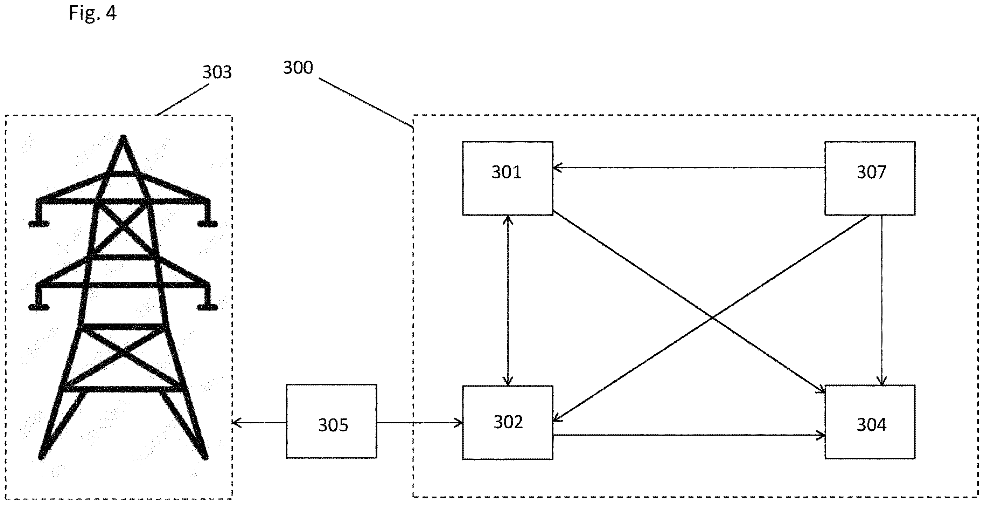

The vertical-axis wind turbines 107 provided on the counterweight side 104 of the boom 100 are configured to harness wind energy, e.g. during crane operations. The wind energy harnessed may be stored in a battery, supplied to the grid, and/or used to power the tower crane's systems (see also fig. 4). Doing so, its reliance on conventional power sources and its carbon footprint is reduced.

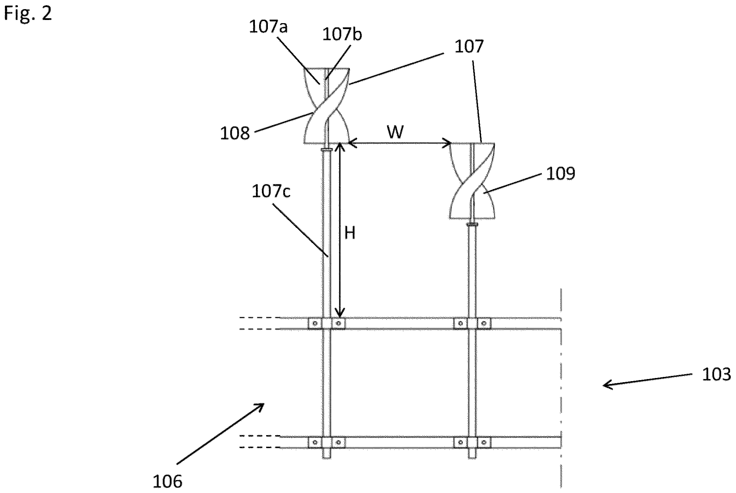

Fig. 2 schematically shows a side view of a part of the counterweight side 106 of the boom of the tower crane according to Fig. 1. The two vertical-axis wind turbines 107 are of the type having one or more helical shaped blades 107a. The helical blades 107a have a twisted or corkscrew-like form. The helical shaped blades 107a extend wrapped along the vertical rotational axis 107b of the wind turbine 107, such as the so called Windwokkel^{™}. The helical shape of the blade helps to maximize the capture of wind energy from various wind directions. In the example as shown, the vertical-axis wind turbine 107 is a Gorlov-type VWAT having helical shaped blades 107a. The blades 107a are shaped like a helix or an "S" curve. The wind turbines have two or three helical shaped blades 107a attached to the main rotor shaft 107b.

Each vertical-axis wind turbine 107 is arranged on a pole 107c having a clearance distance H relative to the boom 104 of at least 2 meters, for example 2.5 meters. The clearance distance H is specifically chosen to provide ample space for maintenance personnel to safely access the boom 104 and conduct maintenance operations on the tower crane 100, e.g. on the wind turbine 107. The clearance distance H prevents contact with rotating blades 107a when someone needs to be near the vertical-axis wind turbines 107.

In fig. 2, the tower crane 100 comprises two vertical-axis wind turbines 107, wherein a first vertical-axis wind turbine 108 is arranged on the boom 104 at a vertical position higher than a second vertical-axis wind turbine 109, the first vertical-axis wind turbine 108 neighbouring the second vertical-axis wind turbine 109. The wind turbines 108,109 are neighbouring, because there is no other wind turbine on the straight (imaginary) line between the two neighbouring wind turbines 108,109. By arranging the first vertical-axis wind turbine 108 at a vertical position higher than a second vertical-axis wind turbine 109 on the boom 104, the impact of wind shadow on each wind turbine 108,109 is minimised in order to optimise the efficiency of the wind turbines 108,109.

Further, the first vertical-axis wind turbine 108 is arranged at a horizontal distance from the mast 103 which distance is larger than horizontal distance of the second vertical-axis wind turbine 109 relative to the mast 103. By doing so, the effect of wind shadow is further minimized. A horizontal spacing W between the first vertical-axis wind turbine 108 and the second vertical-axis wind turbine 109 is between 2.0-4.0 meters, preferably between 2.5-3.0 meters The optimal spacing between the vertical-axis wind turbines 108, 109 depends on various factors, including wind turbine size, wind speed and direction and atmospheric conditions.

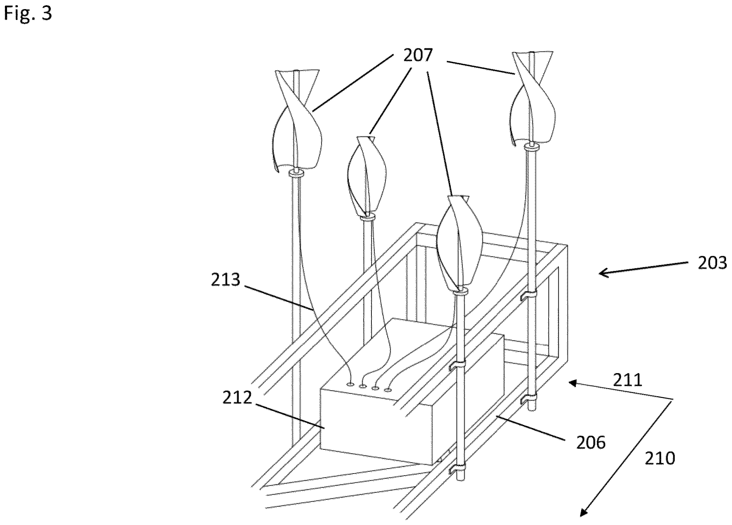

Fig. 3 shows a perspective view of an alternative embodiment, wherein four vertical-axis wind turbines 207 are provided on a counterweight side of a boom. The four vertical-axis wind turbines 207 are evenly positioned near the mast 203 in two parallel rows along the longitudinal direction (indicated by the arrow 210) of the counterweight side 206 of the boom. Each row consists of two vertical-axis wind turbines 207 placed side by side. As can be seen in fig. 3, adjacent vertical-axis wind turbines 207, both in longitudinal direction 210 and in transverse direction 211, are arranged on a different vertical position on the boom. The vertical-axis wind turbines 207 are for example interconnected both electrically and through a centralized control system 212. This enables coordinated operation and data sharing between the wind turbines, enhancing overall system performance and efficiency. Electrical cables 213 run along the counterweight side 206 of the boom to transfer the generated power from the vertical-axis wind turbines 207 e.g. to the tower crane's base (not shown in fig. 3). From there, the generated power is supplied into the power grid and/or stored in a battery device for later use (see also fig. 4), for example by using a power conversion and distribution system.

Fig. 4 schematically illustrates an embodiment showing an electrical connection arrangement between a power grid and the tower crane according to the invention. The tower crane 300 comprises a battery device 301 electrically connected to one or more vertical-axis wind turbines 307. The battery device 301 is configured to be charged by the vertical-axis wind turbines 307. A grid connector 302 is configured for connecting the tower crane 300 to the power grid 303 and one or more electric systems 304 of the tower crane 300. The electric systems 304 of the tower crane 300 may for example comprise one or more of:
- an electrically driven hoisting device configured for hoisting the hoisting cable with the gripper and for moving the vertical part of the hoisting cable along the boom to and fro with respect to the mast;
- the lighting of the crane and/or operator's cabin;
- the heating of the operator's cabin,
- the controller used by the operator to control the hoisting operation.

The battery device 301 is further electrically connected to the grid connector 302 and configured for being charged by the power grid 303. For example, the battery device 301 comprises a battery and a power converter arranged between the battery and the vertical-axis wind turbines 307. The power converter is configured to convert an input power received from the vertical-axis wind turbines 307 to an output power applied to charge the battery. For example, the power converter is an AC (alternating current)/DC (direct current) converter, wherein the input power is an AC power and the output power is a DC power. For example, the battery is able to power one or more electric systems 304 of the tower crane 300 which operate at a low voltage, e.g. 24 V.

In Fig. 4, the tower crane 300 is connected to the power grid 303 via the grid connector 302, e.g. a plug.

For example, in case the vertical-axis wind turbines 307 are generating wind power which is insufficient to power the tower crane 300 and/or the battery is insufficiently charged, the tower crane 300 can additionally or fully be powered by the power grid 303. The electrically driven hoisting device 304 of the tower crane 300 for example comprises a trolley system provided on the hoisting side allowing the hoisting cable with the hoisting gripper to move back and forth along the length of the hoisting side of the boom.

When the vertical-axis wind turbines 307 are generating no wind power, e.g. during windless periods, the battery device 301 can be charged by the power grid 303 when the state of charge of the battery is low. Alternatively, when the battery is fully charged, excess electricity generated by the vertical-axis wind turbines 307 can be provided to the power grid 203.

The vertical-axis wind turbines 307 are configured to charge the battery device 301 outside operating hours of the tower crane 300. The battery device 301 is configured to power the one or more electric systems 304 during operating hours of the tower crane whilst simultaneously recharging the battery device 301 by the power grid 303 and, optionally, by the one or more vertical-axis wind turbines 307. The battery device 301 and the vertical-axis wind turbines 307 are designed in a way that allow them to charge the battery device 301 during periods when the tower crane 300 is not in operation, typically referred to as outside operating hours of the tower crane 300, e.g. during the night hours. Optionally, the charging process of the battery device 301 outside operating hours can at least partly take place by drawing power from the power grid 303. During the tower crane's operating hours, the stored energy in the battery device 301 is utilized to power, such as fully powering, the one or more electric systems 304, enabling smooth and uninterrupted tower crane operations. Simultaneously, the battery device 301 can continue to recharge itself by drawing power from both the power grid 303 and the wind turbines 307, if available. This ensures that the tower crane's power demands are met efficiently and sustainably. By utilizing energy generated by the wind turbines 307 during non-operating hours and storing the excess energy in the battery device 301, the battery device 301 is able to provide power during the tower crane's active hours without relying solely on the power grid 303, thereby reducing carbon emissions and operating costs.

Further, the grid connector 302 is configured to connect the battery device 301 to the power grid 303 via a fuse system 305 limiting the current taken from the power grid 303 to below or up to 100 Amp. For example, the fuse system 305 comprises three fuses of 32 Amp each. By working with low ampere connections, such as 100 Amp or lower, less robust and expensive electrical infrastructure is required. This infrastructure includes smaller conductors, circuit breakers, and other equipment, leading to cost savings in both installation and maintenance. Generally, tower cranes require a higher ampere connection to meet their power requirements adequately. The tower crane 300 can e.g. be used on a grid connection which is commonly found in residential areas or utilized for various electrical appliances and equipment with an average power requirement. Therefore, the tower crane 300 is in compliance with the common power requirement of local regulations and thus widely applicable.

The tower crane 300 and the battery device 301 are configured such that the battery device functions as an electrical buffer between the hoisting device 304 and the power grid 303 to limit the current taken from the power grid to below or up to 100 Amp. The battery device 301 functioning as an electrical buffer between the hoisting device 304 and the power grid 303 ensures that the power grid 303 is capable of delivering a current below or up to 100 Amp to the tower crane 300 without becoming overloaded by power peaks induced by the tower crane 300. Overloading of the power grid 303 can lead to power outages, damage to electrical equipment and potential safety hazards. For example, during periods wherein there is a low power demand of the tower crane 300, the battery device 301 is fully charged by energy from the vertical-axis wind turbines 307 and/or the power grid 303. In case there is a high power demand of the tower crane 300, e.g. during hoisting operations, the (fully charged) battery device 301 is able to limit the current taken from the power grid 303 to operate the tower crane 300 due to the stored energy in the battery device 301.

## Claims

1. Tower crane for hoisting a load, the tower crane comprising:
- a base arranged on the ground,
- a mast mounted on the base,
- a boom extending transverse to the mast, the boom having a hoisting side carrying a hoisting cable with hoisting gripper for gripping the load to be manipulated by the tower crane, and a counterweight side provided with a counterweight, wherein the hoisting side and counterweight side of the boom extend in opposite directions from the mast,
wherein the boom is provided with one or more vertical-axis wind turbines.

2. Tower crane according to claim 1, wherein the vertical-axis wind turbines are of the type having one or more helical shaped blades.

3. Tower crane according to claim 2, wherein the one or more helical shaped blades extend wrapped along the vertical rotational axis of the wind turbine.

4. Tower crane according to any of the preceding claims, wherein the one or more vertical-axis wind turbines are provided on the counterweight side of the boom.

5. Tower crane according to any of the preceding claims, further comprising:
- a battery device electrically connected to the one or more vertical-axis wind turbines and configured to be charged by the one or more vertical-axis wind turbines; and
- a grid connector configured for connecting the tower crane to the power grid; ;
wherein the battery device is further electrically connected:
- to the grid connector and configured for being charged by the power grid, and
- to one or more of the electric systems of the tower crane.

6. Tower crane according to claim 5, wherein the one or more electric systems comprise an electrically driven hoisting device configured for hoisting the hoisting cable with the gripper and for moving the vertical part of the hoisting cable along the boom to and fro with respect to the mast.

7. Tower crane according to claim 5 or 6,
wherein the battery device and the one or more vertical-axis wind turbines are configured to charge the battery device outside operating hours of the tower crane, and
wherein the battery device is configured to power the hoisting device during operating hours of the tower crane whilst simultaneously recharging the battery device by the power grid and, optionally, by the one or more vertical-axis wind turbines.

8. Tower crane according to any of the preceding claims 5-7, wherein the grid connector is configured to connect the battery device to the power grid via a fuse system limiting the current taken from the power grid to below or up to 100 Amp.

9. Tower crane according to claim 8, wherein the fuse system limits the current taken from the grid to below 80 or up to Amp, for example via three fuses of 25 Amp each.

10. Tower crane according to any of the preceding claims 5-9, wherein the tower crane and the battery device are configured such that the battery device functions as an electrical buffer between the hoisting device and the power grid to limit the current taken from the power grid to below or up to 100 Amp.

11. Tower crane according to claim 10, wherein the electrical buffer function of the battery device limits the current taken from the power grid to below or up to 80 Amp.

12. Tower crane according to any of the preceding claims 5-11, wherein the battery device has a capacity of at least 20 kWh, such as at least 40 kWh or at least 60 kWh or at least 80 kWh.

13. Tower crane according to any of the preceding claims 5-12, wherein the battery device has a capacity of at most 250 kWh, such as at most 200 kWh or at most 150 kWh.

14. Tower crane according to any of the preceding claims, wherein each vertical-axis wind turbine is arranged on a pole having a clearance distance relative to the boom of at least 2 m.

15. Tower crane according to any of the preceding claims, wherein the tower crane comprises at least two vertical-axis wind turbines, wherein a first vertical-axis wind turbine is arranged on the boom at a vertical position higher than a second vertical-axis wind turbine, the first vertical-axis wind turbine neighbouring the second vertical-axis wind turbine.

16. Tower crane according to claim 15, wherein the bottom side of the first vertical-axis wind turbine is arranged at a vertical position equal to or higher than the top side of the second vertical-axis wind turbine.

17. Tower crane according to any of the preceding claims 15-16, wherein the first vertical-axis wind turbine is arranged at a horizontal distance from the mast which distance is larger than horizontal distance of the second vertical-axis wind turbine to the mast.

18. Tower crane according to any of the preceding claims 15-17, wherein a horizontal spacing between the first vertical-axis wind turbine and the second vertical-axis wind turbine is between 1-4 meters, preferably between 1.5-3 meters.

19. Tower crane according to any of the preceding claims, wherein the one or more vertical-axis wind turbines have a height between 1.5 -3.5 meters, preferably between 2.0-2.5 meters.

20. Use of a tower crane according to any of the preceding claims 1-19 for hoisting a load, wherein the tower crane is operating off-grid.
